# EUROPÄISCHE PATENTSCHRIFT

(11) **EP 0 682 172 B1**
(45) Veröffentlichungstag und Bekanntmachung des Hinweises auf die Patenterteilung: **24.06.1998**
(21) Anmeldenummer: 95106183.7
(22) Anmeldetag: 26.04.1995
(51) Int. Cl.: F01N 1/08

(54) **Abgasschalldämpfer**
Exhaust silencer
Silencieux d'échappement

(30) Priorität: 14.05.1994 DE 4416763
(43) Veröffentlichungstag der Anmeldung: 15.11.1995
(73) Patentinhaber: ERNST-APPARATEBAU GmbH & Co., D-58099 Hagen (DE)
(72) Erfinder: Brinkmann, Friedrich-Wilhelm, D-58135 Hagen (DE)
(74) Vertreter: COHAUSZ HASE DAWIDOWICZ & PARTNER

(56) Entgegenhaltungen:
- DE-A- 3 012 876
- GB-A- 1 214 989
- GB-A- 2 109 855
- US-A- 2 402 078
- US-A- 4 673 058
- US-A- 5 025 890

## Beschreibung

Die Erfindung betrifft einen Abgasschalldämpfer mit einem Gehäuse, mit einer Eintrittsseite und einer Austrittsseite, wobei das Gehäuse durch zwei Trennwände in drei Kammern unterteilt ist und mit einem Abgaseintrittsrohr und einem Abgasaustrittsrohr, die zumindest teilweise zueinander parallel liegen und in den Rohrwänden Öffnungen besitzen.

Aus der US-A-2 402 078 ist ein Abgasschalldämpfer bekannt, bei dem ein Abgaseintrittsrohr Öffnungen in der Rohrwand hat, durch die die Gase in ein das Abgaseintrittsrohr koaxial umfassendes Rohr treten. Die Öffnungen sind dabei von der Eintrittsseite mit zunehmender Dichte beliebig über die Rohrwand verteilt angeordnet. Die Abgase werden bei dem Abgasschalldämpfer gemäß der US-A-2 402 078 mehrfach hin- und hergelenkt und durch Kammern geführt. Bedingt durch die Abgasführung sammelt sich jedoch nachteilig Kondensat in den Kammern.

Durch die Aggressivität des Kondensats kommt es zu einem Durchrosten des Abgasschalldämpfers von innen, wodurch die Lebensdauer des Abgasschalldämpfers stark herabgesetzt wird.

Weitere Abgasschalldämpfer sind aus den deutschen Patentanmeldungen 32 41 887, 35 26 609 und 36 36 801 bekannt. Um das Kondensat aus dem Inneren des Schalldämpfergehäuses herauszubringen, ist es aus diesen Schriften bekannt, im Abgasaustrittsrohr Düsen oder Schlitze einzuformen, für die die Rohrwand nicht nur eingeschnitten, sondern auch verbogen werden muß. Dies ist ein erheblicher zusätzlicher Arbeitsaufwand. Darüber hinaus ist es bei diesen bekannten Konstruktionen erforderlich, für unterschiedlich große Kraftfahrzeugmotoren unterschiedlich große und verschieden konstruierte Schalldämpfer herzustellen.

Aufgabe der Erfindung ist es, einen Abgasschalldämpfer der eingangs genannten Art so zu verbessern, daß bei einfacher Konstruktion und Herstellung und bei einem hohen Dämpfungsgrad eine einzige Schalldämpferkonstruktion für kleine und große Kraftfahrzeugmotoren Verwendung finden kann.

Diese Aufgabe wird erfindungsgemäß dadurch gelöst, daß das Abgaseintrittsrohr im Bereich der mittleren Kammer an seiner Mantelfläche verteilt angeordnete, im Vergleich zum Durchmesser des Abgaseintrittsrohrs kleine runde Öffnungen aufweist, wobei die Öffnungen Ring-Gruppen bilden und die Anzahl der Öffnungen des Rings, der von den Ring-Gruppen am nächsten zur Schalldämpferaustrittsseite liegt größer ist, als die Anzahl der Öffnungen der Ring-Gruppe, der von den Ringen am weitesten von der Schalldämpferaustrittsseite entfernt liegt. Eine solche Anordnung führt zu einer erheblichen Verbesserung der Dämpfereigenschaften, da sie die Bildung von Staustufen vermeidet, in denen sich Restkondensat sammeln kann. Hierbei ist noch zu beachten, daß nicht nur diese runden Öffnungen, sondern auch die größere Öffnung in der Gehäusewand die Dämpfungseigenschaften erhöht.

Besonders vorteilhaft ist hierbei, wenn das Abgasaustrittsrohr im Bereich der mittleren Kammer kleine runde Öffnungen aufweist, deren Anzahl und Dichte geringer ist als die Öffnungen des Abgaseintrittsrohres in der mittleren Kammer. Eine Verbesserung der Dämpfereigenschaften wird auch dadurch erreicht, daß das Abgaseintrittsrohr im Bereich der ersten, dem Schalldämpfereinlaß nahen Kammer kleine runde Öffnungen aufweist, deren Anzahl und Dichte geringer ist, als die des Abgasaustrittrohres im Bereich der mittleren Kammer. Von Vorteil ist auch, wenn die im Querschnitt kreisförmigen Abgaseintritts- und Abgasaustrittsrohre denselben Durchmesser aufweisen.

Eine hohe Schalldämmung wird erreicht, wenn mindestens eine Trennwand statt einer oder zwei von einem Abgasrohr freien Öffnung(en) eine Vielzahl kleinerer Öffnungen verteilt über die Trennwand aufweist, deren Durchmesser größer ist als der der Öffnungen in den Abgasrohren und deren Gesamtquerschnitt dem Querschnitt der freien Öffnung(en) etwa entspricht.

Auch wird hierzu vorgeschlagen, daß das Abgasautrittsrohr im Bereich der vorderen Kammer eine hohe Anzahl von dicht nebeneinander angeordneten Öffnungen aufweist. Durch beide Maßnahmen steigt wiedererwarten der Strömungswiderstand nicht an. Besonders vorteilhaft ist es, wenn das Abgasaustrittsrohr im Bereich der hinteren Kammer zu zwei Austrittsrohren verzweigt, die durch die Wand der Austrittsseite hindurchtreten.

Ein Ausführungsbeispiel der Erfindung ist in der Zeichnung dargestellt und wird im folgenden näher beschrieben.

Es zeigen:

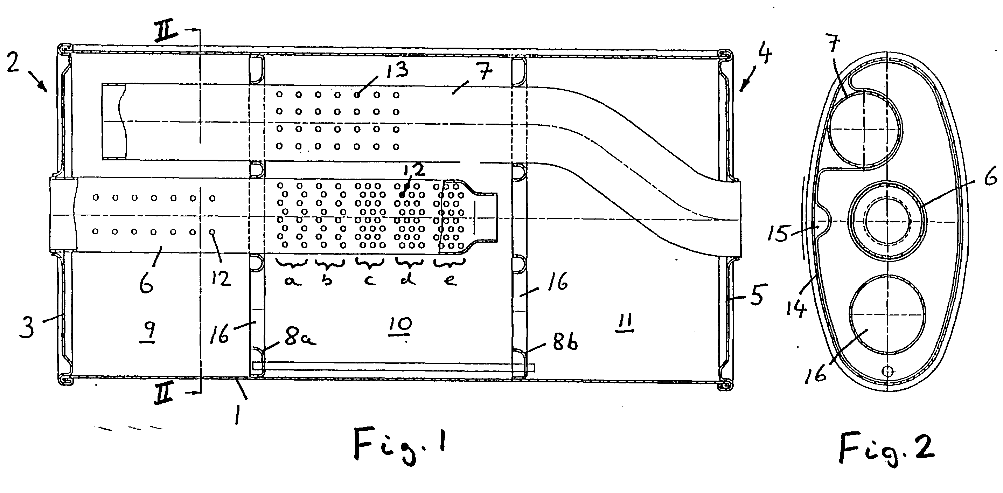

- Figur 1:: Einen axialen Schnitt durch den Schalldämpfer in einer ersten Ausführungsform.

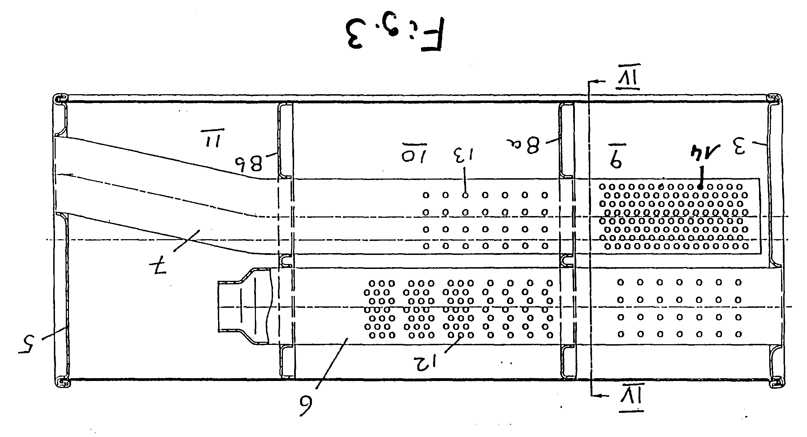

- Figur 2:: Einen Schnitt nach II-II in Figur 1.
- Figur 3:: Eine zweite Ausführungsform.
- Figur 4:: Einen Schnitt nach IV-IV in Figur 3.
- Figur 5:: Eine dritte Ausführungsform und

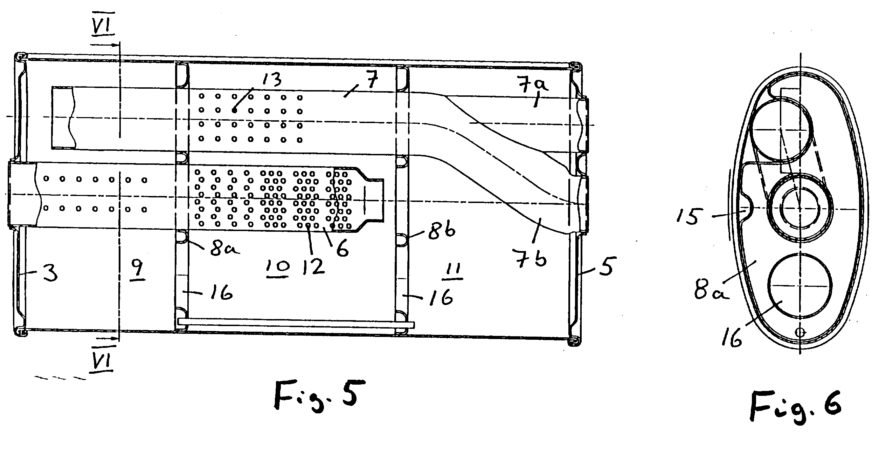

- Figur 6:: einen Schnitt nach VI-VI in Figur 5.

Der Abgasschalldämpfer weist ein im Querschnitt ovales Gehäuse 1 auf, das auf der Eintrittsseite 2 durch eine ovale Wand 3 und auf der Austrittsseite 4 durch eine ovale Wand 5 verschlossen ist. Durch die Wand 3 der Eintrittsseite ist ein Abgaseintrittsrohr 6 mittig und koaxial nach innen geführt. Durch die Wand 5 der Austrittsseite ist ein Abgasaustrittsrohr 7 nach außen geführt.

Der Innenraum des Gehäuses 1 ist durch eine erste Trennwand 8a und eine zweite Trennwand 8b in drei etwa gleich große Kammern aufgeteilt, wobei die Trennwände 8a und 8b parallel zu den Wänden 3 und 5 liegen. Durch diese Aufteilung entsteht in Strömungsrichtung eine vordere Kammer 9, eine mittlere Kammer 10 und eine hintere Kammer 11.

Das Abgaseintrittsrohr 6 durchdringt die Wände 3 und 8a und endet kurz vor der Wand 8b. Die Mündung des Abgaseintrittsrohrs 6 ist verjüngt ausgeführt, so daß am Austritt eine Verengung entsteht. Das Abgasautstrittsrohr 7 läuft seitlich parallel in einem geringen Abstand zum Rohr 6 und ist in der Kammer 11 S-förmig abgebogen, so daß das Rohr 7 die mittlere Austrittsöffnung der Wand 5 erreicht.

Das Abgaseintrittsrohr 6 besitzt im Bereich der vorderen Kammer 9 wenige kleine Öffnungen 12, die in Reihen parallel zur Rohrlängsachse angeordnet sind. Im Bereich der mittleren Kammer 10 sind die Öffnungen 12 des Abgaseintrittsrohrs 6 in fünf Gruppen a) bis e), die sich ringförmig um das Rohr 6 erstrecken. In der Öffnungsgruppe a), die der Eintrittsseite 2 am nächsten ist, sind die Öffnungen in ihrer Anzahl am geringsten und zueinander im größten Abstand. In der Gruppe e), die der Austrittsseite 4 am nächsten ist, ist die Anzahl der Öffnungen am höchsten und die Öffnungen zueinander im geringsten Abstand angeordnet. Die Gruppe b) ist im Ausführungsbeispiel mit der Gruppe a) identisch und die Gruppen c) und d) mit der Gruppe e) identisch. Die Gruppen b), c) und d) können aber auch in Anzahl und Abständen Zwischengrößen zwischen den Gruppen a) und e) besitzen.

Das Abgasaustrittsrohr 7, das sich über alle drei Kammern 9 bis 11 erstreckt, verläuft im Bereich der Kammern 9 und 10 parallel zum Abgaseintrittsrohr 6. Das Abgasaustrittsrohr 7 weist im Bereich der mittleren Kammer 10 kleine, runde Öffnungen 13 auf, deren Anzahl und Dichte geringer ist als bei den Öffnungen 12 des Abgaseintrittsrohres 6. Zumindest ein Teil dieser Öffnungen 13 befindet sich im Bereich des Bodens 14 des Schalldämpfers, wobei im Ausführungsbeispiel das Abgasaustrittsrohr im Bereich der Kammern 9 und 10 auf dem Boden 14 aufliegt. Damit kann das Abgasaustrittsrohr 7 Kondensat vom Boden durch die Öffnungen 13 aufnehmen.

Im Ausführungsbeispiel haben alle Öffnungen 12 und 13 beider Rohre 6 und 7 die gleiche runde Form und den selben Durchmesser. Auch besitzen die Rohre 6 und 7 den selben Durchmesser A.

Die beiden Trennwände 8a und 8b weisen am unteren Rand und damit an der tiefsten Stelle des Bodens 14 eine größere Öffnung 15 auf, die eine Ausnehmung oder Einbuchtung im unteren Rand der Trennwand 8a bzw. 8b ist. Durch diese Öffnung wird nicht nur das Kondensat optimal verteilt, sondern es wird auch ein besonders guter Schalldämpfungsgrad erreicht. Die Öffnungen können die größere Öffnung 15 im unteren Rand der Trennwand 8a, 8b einen Querschnitt von 1 cm² bis 2 cm2, vorzugsweise von 1,3 cm² bis 1,7 cm² aufweisen.

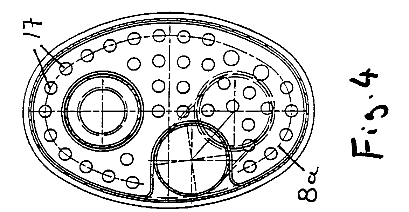

In beiden Trennwänden 8a, 8b befindet sich jeweils eine Öffnung 16, die auf der dem Abgasaustrittsrohr 7 gegenüberliegenden Seite der Trennwand angeordnet ist und in der sich kein Rohr befindet. Die Trennwände 8a und 8b können aber auch statt der freien Öffnungen 16 eine Vielzahl kleinerer Öffnungen 17 aufweisen, die über die Trennwände in etwa gleichmäßig verteilt sind und deren Gesamtquerschnitt dem Querschnitt der Öffnung 16 entspricht (Figur 4). Die Öffnungen 17 sind größer als die Öffnung 12.

Im Ausführungsbeispiel nach Figur 3 weist das Abgasaustrittsrohr 7 im vorderen Bereich, d.h. in der vorderen Kammer 9 eine große Anzahl kleiner, eng beieinander liegender Öffnunen 12 auf. Ferner verzweigt das Abgasaustrittsrohr 7 in der hinteren Kammer 11 zu zwei Austrittsteilrohren 7a und 7b (Figur 5), die durch die Wand 5 nach außen treten.

## Patentansprüche

1. Abgasschalldämpfer mit einem Gehäuse (1), mit einer Eintrittsseite (2) und einer Austrittsseite (4), wobei das Gehäuse durch zwei Trennwände (8a, 8b) in drei Kammern (9-11) unterteilt ist und mit einem Abgaseintrittsrohr (6) und einem Abgasaustrittsrohr (7), die zumindest teilweise zueinander parallel liegen und in den Rohrwänden Öffnungen (12, 13) besitzen,
**dadurch gekennzeichnet,** daß das Abgaseintrittsrohr (6) im Bereich der mittleren Kammer (10) an seiner Mantelfläche verteilt angeordnete, im Vergleich zum Durchmesser des Abgaseintrittsrohrs (6) kleine runde Öffnungen (12) aufweist, wobei die Öffnungen (12) Ring-Gruppen ((a) -(e)) bilden und die Anzahl der Öffnungen (12) der Ringe, die von den Ring-Gruppen ((a) - (e)), am nächsten zur Schalldämpferaustrittsseite (4) liegt größer ist, als die Anzahl der Öffnungen (12) der Ringe, die von den Ring-Gruppen ((a) - (e)) am weitesten von der Schalldämpferaustrittsseite (4) entfernt liegt.

2. Abgasschalldämpfer nach Anspruch 1,
**dadurch gekennzeichnet,** daß das Abgasaustrittsrohr (7) im Bereich der mittleren Kammer (10), im Vergleich zum Durchmesser des Abgasaustrittsrohrs (7) kleine runde Öffnungen (13) aufweist, deren Anzahl kleiner ist als die Anzahl der Öffnungen (12) des Abgaseintrittsrohres (6) in der mittleren Kammer (10) und deren Abstand zueinander größer ist als der Abstand der Öffnungen (12) des Abgaseintrittsrohres (7) zueinander.

3. Abgasschalldämpfer nach Anspruch 1,
**dadurch gekennzeichnet,** daß das Abgaseintrittsrohr (6) im Bereich der ersten, dem Schalldämpfereinlaß nahen Kammer (9) im Vergleich zum Durchmesser des Abgaseintrittsrohres (6) kleine runde Öffnungen (12) aufweist, deren Anzahl kleiner ist als die Anzahl der Öffnungen (13) des Abgasaustrittrohres (7) im Bereich der mittleren Kammer (10) und deren Abstand zueinander größer ist als der Abstand der Öffnungen (13) des Abgasaustrittsrohres (7) zueinander.

4. Abgasschalldämpfer nach einem der vorherigen Ansprüche, **dadurch gekennzeichnet,** daß das Abgasaustrittsrohr (7) nahe dem Gehäuseboden (14) liegt, insbesondere auf dem Gehäuseboden aufliegt und nahe dem Gehäuseboden (14) in der Rohrwand kleine runde Öffnungen (13) aufweist.

5. Abgasschalldämpfer nach einem der vorherigen Ansprüche, **dadurch gekennzeichnet,** daß die im Querschnitt kreisförmigen Abgaseintritts- und Abgasaustrittsrohre (6,7) denselben Durchmesser (A) aufweisen.

6. Abgasschalldämpfer nach einem der vorherigen Ansprüche, **dadurch gekennzeichnet,** daß mindestens eine Trennwand (8a, 8b) statt einer oder zwei von einem Abgasrohr freien Öffnung(en) (16) eine Vielzahl von Öffnungen (17) verteilt über die Trennwand aufweist, deren Durchmesser größer ist als der der Öffnungen (12) in den Abgasrohren und deren Gesamtquerschnitt dem Querschnitt der freien Öffnung(en) (16) etwa entspricht.

7. Abgasschalldämpfer nach einem der vorherigen Ansprüche, **dadurch gekennzeichnet,** daß das Abgasautrittsrohr (7) im Bereich der vorderen Kammer (9) eine größere Anzahl von dicht nebeneinander angeordneten Öffnungen (14) als im Bereich der mittleren Kammer (10) aufweist.

8. Abgasschalldämpfer nach einem der vorherigen Ansprüche, **dadurch gekennzeichnet,** daß das Abgasaustrittsrohr (7) im Bereich der hinteren Kammer (11) zu zwei Austrittsrohren (7a, 7b) verzweigt, die durch die Wand (5) der Austrittsseite (4) hindurchtreten.

## Claims

1. An exhaust silencer having a casing (1), an inlet side (2) and an outlet side (4), the casing being subdivided by two partitions (8a, 8b) into three chambers (9-11), an exhaust inlet pipe (6) and an exhaust outlet pipe (7) being provided which are disposed at least partly parallel with one another and have openings (12, 13) in the pipe walls, characterised in that the exhaust inlet pipe (6) has disposed distributed over its generated surface round openings (12) which are small in comparison with the diameter of the waste gas inlet pipe (6), the openings (12) forming groups of rings ((a) - (e)) and the number of openings (12) of that group of rings ((a) - (e)) which is situated closest to the silencer outlet side (4) being greater than the number of openings (12) in that group of rings ((a) - (e)) which is situated furthest away from the silencer outlet side (4).

2. An exhaust silencer according to claim 1,
characterised in that the exhaust outlet pipe (7) has in the zone of the central chamber (10) round openings (13) which are small in comparison with the diameter of the waste gas outlet pipe (7) and whose number is smaller than the number of openings (12) of the exhaust inlet pipe (6) in the central chamber (10) and whose spacing from one another is greater than the spacing from one another of the openings (12) of the exhaust inlet pipe (7).

3. An exhaust silencer according to claim 1,
characterised in that the exhaust inlet pipe (7) has in the zone of the first chamber (9) adjacent the silencer inlet round openings which are small in comparison with the diameter of the exhaust inlet pipe (6) and whose number is smaller than the number of openings (13) in the exhaust outlet pipe (7) in the zone of the central chamber (10) and whose spacing from one another is greater than the spacing from one another of the openings (13) of the exhaust outlet pipe (7).

4. An exhaust silencer according to one of the previous claims, characterised in that the exhaust outlet pipe (7) is situated adjacent the casing floor (14), more particularly lies on the casing floor and has small round openings (13) in the pipe wall adjacent the casing bottom (14).

5. An exhaust silencer according to one of the previous claims, characterised in that the exhaust inlet and exhaust outlet pipes (6, 7) are circular in cross-section and have the same diameter (A).

6. An exhaust silencer according to one of the previous claims, characterised in that at least one partition (8a, 8b) has instead of one or two opening(s) (16) free from an exhaust pipe a plurality of openings (17) which are distributed over the partition and whose diameter is greater than the diameter of the openings (12) in the exhaust pipes and whose total cross-section substantially corresponds to the cross-section of the free opening(s) (16).

7. An exhaust silencer according to one of the previous claims, characterised in that the exhaust outlet pipe (7) has in the zone of the front chamber (9) a larger number of openings (14) disposed close beside one another than in the zone of the central chamber (10).

8. An exhaust silencer according to one of the previous claims, characterised in that the exhaust outlet pipe (7) branches in the zone of the rear chamber (11) to form two outlet pipes (7a, 7b) which extend through the wall (5) of the outlet side (4).

## Revendications

1. Silencieux d'échappement avec un carter (1), avec un côté d'entrée (2) et un côté de sortie (4), le carter étant divisé en trois chambres (9-11) par deux parois séparatrices (8a, 8b) et avec un tube d'entrée des gaz d'échappement (6) et un tube de sortie des gaz d'échappement (7) qui se trouvent au moins partiellement parallèles entre eux et possèdent des orifices (12, 13) dans les parois de tubes,
caractérisé en ce que le tube d'entrée des gaz d'échappement (6) présente à sa surface périphérique, dans la zone de la chambre médiane (10), des orifices (12) ronds, disposés répartis, petits par rapport au diamètre du tube d'entrée des gaz d'échappement (6), les orifices (12) formant des groupes annulaires ((a)-(e)) et le nombre des orifices (12) des anneaux qui, dans les groupes annulaires ((a)-(e)) se trouvent les plus proches du côté de sortie (4) du silencieux étant supérieur au nombre des orifices (12) des anneaux qui, dans les groupes annulaires ((a)-(e)), sont les plus éloignés du côté de sortie (4) du silencieux.

2. Silencieux d'échappement selon la revendication 1, caractérisé en ce que le tube de sortie des gaz d'échappement (7) présente, dans la zone de la chambre (10) médiane, des orifices (13) ronds, petits par rapport au diamètre du tube de sortie des gaz d'échappement (7), dont le nombre est inférieur au nombre des orifices (12) du tube d'entrée des gaz d'échappement (6) dans la chambre médiane (10) et dont l'écartement les uns des autres est supérieur à l'écartement les uns des autres, des orifices (12) du tube d'entrée des gaz d'échappement (6).

3. Silencieux d'échappement selon la revendication 1, caractérisé en ce que le tube d'entrée des gaz d'échappement (6) présente, dans la zone de la première chambre (9) proche de l'entrée du silencieux, des orifices (12) ronds, petits par rapport au diamètre du tube d'entrée des gaz d'échappement (6), dont le nombre est inférieur au nombre des orifices (13) du tube de sortie des gaz d'échappement (7) dans la zone de la chambre médiane (10) et dont l'écartement les uns des autres est supérieur à l'écartement les uns des autres des orifices (13) du tube de sortie des gaz d'échappement (7).

4. Silencieux d'échappement selon l'une des revendications précédentes,
caractérisé en ce que le tube de sortie des gaz d'échappement (7) se trouve près du fond (14) du carter, en particulier est appuyé sur le fond du carter, et présente, près du fond (14) du carter, dans la paroi de tube, de petits orifices (13) ronds.

5. Silencieux d'échappement selon l'une des revendications précédentes,
caractérisé en ce que les tubes d'entrée et de sortie des gaz d'échappement (6, 7), circulaires en section transversale, présentent le même diamètre (A).

6. Silencieux d'échappement selon l'une des revendications précédentes,
caractérisé en ce qu'au moins une paroi séparatrice (8a,8b) présente, au lieu d'un ou deux orifice(s) (16) libres de tube d'échappement, une pluralité d'orifices (17) répartis sur la paroi séparatrice, dont le diamètre est supérieur à celui des orifices (12) dans les tubes d'échappement et dont la section transversale totale correspond sensiblement à la section de l'(des) orifice(s) (16) libre(s).

7. Silencieux d'échappement selon l'une des revendications précédentes,
caractérisé en ce que le tube de sortie des gaz d'échappement (7) présente, dans la zone de la chambre (9) antérieure, un plus grand nombre d'orifices (14) disposés étroitement côte à côte que dans la zone de la chambre (10) médiane.

8. Silencieux d'échappement selon l'une des revendications précédentes,
caractérisé en ce que le tube de sortie des gaz d'échappement (7) bifurque, dans la zone de la chambre (11) postérieure, en deux tubes de sortie (7a, 7b) qui traversent la paroi (5) du côté de la sortie (4).
